# EUROPEAN PATENT APPLICATION

(11) **EP 4 621 921 A2**
(43) Date of publication of application: **24.09.2025**
(21) Application number: 25164371.4
(22) Date of filing: 18.03.2025
(51) Int. Cl.: H01M 10/36

(54) **ELECTROLYTE OF ULTRA EFFICIENT ZINC-BROMINE STATIC BATTERY**

(30) Priority: 21.03.2024 IN 202411021637
(71) Applicant: Offgrid Energy Labs Inc., San Francisco California 94111 (US)
(72) Inventor: Tulachan, Brindan, 208016 Kanpur (IN); Chakrabarty, Sumanta, 713123 Murshidabad (IN)
(74) Representative: Nirwan, Prajwal

(57) **Abstract**

An electrolyte of a static zinc-based battery, includes zinc bromide in a molar concentration ranging from 1.5 M to 3.0 M, a mixture of two or more quaternary ammonium salts as a bromine complexing agent in a range of 30% to 55% of the molar concentration of the zinc bromide, a glycol based anti-freezing agent in molar concentration ranging from 0.1 M to 2.0 M; and one or more additional supporting ionic conducting agents selected from a group comprising of zinc chloride, potassium chloride, magnesium chloride, lithium chloride, calcium chloride, or a combination thereof. Each of the one or more additional supporting ionic conducting agents or their combination is in a molar concentration ranging from 0.5 M to 2 M.

## Description

### CROSS-REFERENCE TO RELATED APPLICATIONS/INCORPORATION BY REFERENCE

This Application makes reference to, claims priority to, and claims benefit from Indian Non-Provisional Application No. 202411021637 filed on March 21, 2024.

### TECHNICAL FIELD

The present disclosure relates to an electrolyte of a zinc-bromine static battery, and particularly to the electrolyte of a zinc-bromine redox static battery, where the electrolyte comprises zinc bromide and a specific bromine complexing agent along with other electrolyte ingredients, where the bromine complexing agent is used in a controlled amount that arrest highly soluble tribromide ions formed upon charging process from an aqueous electrolyte in a solid form.

### BACKGROUND

Fossil fuel resources are not only inherently finite but also their combustion results in environmental problems, making the research community focus more towards green, renewable, and sustainable energy resources for energy generation, utilization, and storage. In order to exploit the sustainable energy resources, metal halide electrochemical cells were introduced for their high efficiency, low cost, durability, and eco-friendly rechargeable energy storage devices. However, the metal halide electrochemical cells undergoes degradation over time, leading to a decrease in performance and a limited cycle life. In addition, the metal halide electrochemical cells have a limited operating temperature range and may not be suitable for extreme conditions, which limits the practical use, which is not desirable.

In recent times, the tremendous improvement in cost and performance of lithiumion batteries (LIBs) have made them market dominators in the rechargeable energy storage devices segment. The desire to lower costs and increase energy density, as well as growing concern over Li ion's natural resource, has pushed the development of the so-called "beyond Li-ion" technologies.

In recent years, flow batteries with multiple redox couples are approaching as one of the most promising alternatives for large-scale rechargeable energy storage devices. So far, a variety of energy storage device chemistries involving metal ions of sodium (Na), potassium (K), magnesium (Mg), and zinc (Zn) have been investigated as a possible alternative to the currently existing rechargeable energy storage devices. Out of this Zn based energy storage devices are considered a promising alternative candidate for the large-scale grid applications due to their low cost, eco-friendliness, high safety, material abundance, and ease of manufacturing.

Typically, electrochemical cells are metal halogen cells in which the anode material most commonly employed is zinc and the most commonly employed cathodic halogen is bromine. Such metal halogen electrochemical cells are favoured due to their extremely high theoretical energy density. For example, a zinc-bromine cell has a theoretical energy density of 200 watts hours per pound (Wh/lb) i.e. 720,000 joules per kilogram (J/kg) and an electric potential of about 1.85 volts per cell. However, such electrochemical cells of the foregoing type are known to suffer from a number of technical issues. Most of the technical issues are associated with side reactions, which may occur in such electrochemical cells. For example, during the charging process, free bromine is produced in the electrochemical cells. The free bromine is available for electrochemical reaction with the zinc anode, thereby resulting in self-discharge of the electrochemical cells. Additionally, there is a tendency for hydrogen gas to be generated when considerable amounts of the free bromine are present in an aqueous phase. Zinc-bromine flow batteries are appealing mainly due to their long cycling life and are semi-deposition flow batteries. In a typical zinc-bromine battery (flow and static), zinc bromide acts as both active material and an ionic conductor. The zinc-bromine liquid battery is used as a combination of a flow battery technology and an energy storage device and has a very high application prospect in the field of rechargeable energy storage devices. The electrochemical reactions can be depicted as follows:
Negative side: Zn 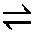 Zn²⁺ + e⁻
Positive side: Br₂ + 2e⁻ 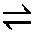 2Br⁻
Overall: Zn + Br₂ 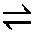 ZnBr₂

During charging, Br₂ is generated at the positive electrode and further complexes with bromide ions (Br⁻) present in aqueous media to form highly soluble Br₃⁻ ions (tribromide ions), while zinc is deposited at the negative electrode simultaneously. Reverse reactions happen at the respective electrodes during the discharge process. Although the highly soluble Br₃⁻ species accelerates the redox kinetics and diffuse to a zinc electrode by cross-diffusion, the technical issue is that they directly react with the plated zinc and therefore trigger self-discharge and low coulombic efficiency. Another existing issue for the zinc-based based energy storage devices is the dendritic Zn deposition, which potentially triggers an internal short circuit. Such technical challenges are alleviated with the multiple strategies of a standard zinc bromide flow battery. However, it is to be understood that all the existing approaches are compromised at the expense of cell resistance, energy efficiency (typically < 60%), increased system size, and complexity. Overall, such conventional approaches sharply raise the capital costs from $8 per kWh based on ZnBr₂ electrolyte and carbon electrode to over $200 per kWh for a battery system, which is not superior at all when compared with the conventional Li-ion technology. Further, the flowable and corrosive Br²/ Br³⁻ species reduce the reliability of the conventional battery systems, leading to cell failure by parts corrosion instead of the intrinsic redox chemistry. Secondary hydrolysis reactions are also problematic for such types of storage batteries when the electrolytes are formulated with excess free water, because bromate solids form, which in tum reduces the amount of available bromide/bromine that can under reduction or oxidation in the electrochemical cell.

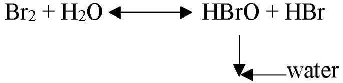

### Bromate solid

To solve the above-mentioned inherent problems of the conventional zinc-bromine flow batteries, the development of a static zinc-bromine battery that can be produced on a commercial scale is necessary. One of the major technical problem in the development of the static zinc-bromine battery is the development of efficient electrolytes that can prevent cross-diffusion and provide high energy efficiency with long cycle life. Moreover, the zinc dendrite formation is difficult to solve and has been a longstanding problem for several decades.

In view of the existing technical problems and unsolved issues in prior known literatures, there is a need for a suitable electrolyte, which is thermally and chemically stable, with enhanced shelf life, and overcomes the problems present with existing electrolytes for zinc-based rechargeable energy storage devices.

### SUMMARY

The present disclosure provides an electrolyte of (for use in) a zinc-bromine static battery. The present disclosure provides a solution to the technical problem of how to minimize self-discharge in the zinc-bromine static battery using the electrolyte, particularly addressing issues related to decrease of energy density and operational life limitations. An aim of the present disclosure is to provide a technical solution that overcomes at least partially the problems encountered in the prior art and provide an improved electrolyte with a specific bromine complexing agent along with electrolyte ingredients. The bromine complexing agent is used in a controlled amount that arrest highly soluble tribromide ions formed upon charging process from an aqueous electrolyte in a solid form. The specific combination and concentration of components in the electrolyte composition provides the zinc bromine static battery with improved operational characteristics. When used in a zinc bromine static battery, the electrolyte composition of the present disclosure enables enhanced performance including reduced self-discharge, increased energy capacity and improved energy efficiency.

One or more objectives of the present disclosure is achieved by the solutions provided in the enclosed independent claims. Advantageous implementations of the present disclosure are further defined in the dependent claims.

In one aspect, the present disclosure provides the electrolyte of the zinc-bromine static battery. The electrolyte of the zinc-bromine static battery includes zinc bromide in molar concentration ranging from 1.5 M to 3.0 M; a mixture of two or more quaternary ammonium salts as a bromine complexing agent in a range of 30% to 55% of the molar concentration of the zinc bromide; a glycol based anti-freezing agent in molar concentration ranging from 0.1 M to 2.0 M; one or more additional supporting ionic conducting agents selected from a group comprising of zinc chloride, potassium chloride, magnesium chloride, lithium chloride, calcium chloride, potassium chloride, or a combination thereof. Further each of the one or more additional supporting ionic conducting agents or their combination is in the molar concentration ranging from 0.5 M to 2 M.

The main challenges of zinc-bromine static batteries include (a) low current densities during cycling, (b) dendrite formation, (c) high viscosity of the electrolyte polybromide phase in low states of charge, (d) self-discharge and (e) pH variations during operation. Present disclosure has dealt and solved the abovementioned problems. Surprisingly, during experimentation, when a mixture of quaternary ammonium salts is used as bromine complexing agents in a range of 30% to 55% of the molar concentration of the zinc bromide (where the zinc bromide is in molar concentration from about 1.5 M to 3.0 M), a significant improvement in reduction in self-discharge is achieved.

The presence of the glycol-based anti-freezing agent, and the additional supporting ionic conducting agents such as zinc chloride, potassium chloride, magnesium chloride, lithium chloride, calcium chloride, potassium chloride, or a combination thereof specified in corresponding molar concentration manifests a synergistic effect by increasing the solubility of complexing agent in zinc bromide electrolyte. Surprisingly, the combination of the additional supporting ionic agents increases ionic conductivity and thermal stability of the electrolyte, solving the aforementioned problems significantly, especially the problems related to the dendrite formation and the self-discharge.

In an implementation, the mixture of quaternary ammonium salts is selected from a combination of TPAB (tetrapropylammonium bromide) and TBAB (tetrabutylammonium) or a chloride salt along with TEAB (tetraethylammonium bromide) or TEAC (tetraethylammonium chloride).

Further, a combination of TEAB with TPAB or TBAB or a chloride enhances the capturing of tribromide ions in solid form. By enhancing the capturing of tribromide ions in the solid form, the combination of TEAB with TPAB or TBAB or a chloride minimises the self-discharge and the selection of salts in a specific concentration range that allows the dissolution of >1.5 M of TEAB (or even higher than that) in the presence of 3 M of zinc bromide. Based on the experimentation, it is observed that the presence of TPAB and TBAB or a chloride increase enhances the capturing of tribromide ions in solid form, minimising the self-discharge of the zinc-bromide static battery.

### BRIEF DESCRIPTION OF THE DRAWINGS

Embodiments of the present disclosure will now be described, by way of example only, with reference to the following diagrams wherein:
FIG. 1 is a diagram illustrating a graphical representation of a charging capacity of a zinc-bromine static battery at a number of charge-discharge cycles of the zinc-bromine static battery, in accordance with an embodiment of the present disclosure;
FIG. 2 is a diagram illustrating a charge-discharge profile of the zinc-bromine static battery for various electrolytes, in accordance with an embodiment of the present disclosure; and
FIG. 3 is a diagram illustrating a graphical representation of an average energy efficiency versus a capacity retention of the zinc-bromine static battery, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

### Definitions

The zinc-bromine static battery refers to a type of rechargeable battery that uses zinc and bromine as its active materials in which the static property comes from the fact that zinc-bromine static battery device does not require any pumps or moving parts to circulate the electrolyte, unlike a flow.

The term "electrolyte solution" shall mean an electrolyte solution that comprises ions and use water as a solvent. The electrolyte solution contains an aqueous solvent and ions, atoms or molecules that have lost or gained electrons, and is electrically conductive.

The term "ambient temperature" shall mean a temperature falling in the range of 25 to 30 degree Celsius.

When referring to a concentration of components or ingredients for eutectic electrolytes, moles shall be based on the total volume of the aqueous electrolyte.

Certain embodiments of the disclosure provide an electrolyte (i.e., an aqueous electrolyte composition) for use in a zinc-bromine static battery, particularly zinc-bromine redox static battery.

In a first example, typically, in the presence of zinc bromide, dissolution of a bromine complexing agent at higher concentration (>0.3 M) is technically challenging and not yet achieved by conventional electrolytes or reported yet, as there is precipitation in the form of bromozincate, which is not desirable.

In a second example, the zinc dendrite formation problem is difficult to solve and has been a longstanding problem for several decades. The dendritic zinc growth can somehow be suppressed by adding a small amount of inorganic or organic additives, but performance in terms of dendritic zinc growth is still not satisfactory. Additionally, an addition of external additive significantly reduces the ionic conductivity, naturally affects the reaction kinetics and, as a consequence, overall performance of the zinc-bromine static battery gets affected.

In a third example, bromine is a very good electro-active species, with improved and reversible kinetics. Typically, the reduction of diatomic bromine to two bromide ions has been used in the electrolyte fluids for decades. Battery types with functions relying on the bromine half reaction include zinc bromide, hydrogen bromide, and vanadium bromide batteries. However, even at relatively low concentrations, the diatomic bromine has a propensity to form a vapor phase, which separates out of the liquid electrolyte, interfering with the recharge of brominecontaining batteries. For this reason, it is necessary to keep the free diatomic bromine concentration in the electrolyte low enough, such that vapor phase formation does not occur, which is achieved via the bromine complexing agents. The bromine complexing agents reduce reactivity and vapor pressure without changing electrochemical properties of the bromine ions. The use of certain morpholine and pyridinium-based quaternary ammonium salts as the bromine complexing agents is known. However, the major drawback of their use as complexing agents for bromine is that they are not always compatible with different bromide chemistries. Moreover, currently, a proper concentration in which the complexing agent is to be used with respect to zinc bromide is not known in the existing art.

To overcome at least partially the technical problems discussed in the above examples and increase performance of the zinc-bromine static battery, in one aspect of the present disclosure, an improved electrolyte (i.e., an improved aqueous electrolyte composition) is provided for high-performance zinc-bromine static batteries.

In one aspect of the present disclosure, an electrolyte is provided for use in the zinc-bromine static battery. The electrolyte comprises the zinc bromide in molar concentration ranging from 1.5 M to 3.0 M. The electrolyte further comprises a mixture of two or more quaternary ammonium salts as a bromine complexing agent in a range of 30% to 55% of the molar concentration of the zinc bromide. The electrolyte further includes a glycol-based anti-freezing agent in molar concentration ranging from 0.1 M to 2.0 M. moreover, the electrolyte further includes one or more additional supporting ionic conducting agents selected from a group comprising of zinc chloride, potassium chloride, magnesium chloride, lithium chloride, calcium chloride, potassium chloride, or a combination thereof. Further, each of the one or more additional supporting ionic conducting agents or their combination is in a molar concentration ranging from 0.5 M to 2 M.The zinc bromide which is an active ingredient takes part in the redox reaction. The higher the zinc bromide concentration, the higher the energy density is achieved. The mixture of quaternary ammonium salts having general formula of [CH₃(CH₂)ₙ]₄N⁺X⁻, where "n" can be varies from "0" to "3" and X can be 'Br' i.e. bromine or 'Cl' i.e. chlorine is used as the bromine complexing agent.

In an example, one of the bromine complexing agents may be tetraethylammonium bromide (TEAB) along with other bromine complexing agent/s having higher molar mass than that of TEAB. Further the bromine complexing agent with higher molar mass may be TPAX or TBAX. Here 'X' refers to halogen which may be either bromine (Br) or chlorine (Cl).

More specifically, the concentration of TEAB may vary from 10% to 40% of a zinc bromide concentration. Surprisingly, during experimentation, when the TEAB along with TPAB or TBAB was used as the complexing agents in about 30% to 55% of the zinc bromide, a significant improvement in reduction in self-discharge was achieved.

The self-discharge is one of the major concerns for zinc-bromine static battery. Effective utilization of bromine complexing agents in the zinc-bromine static battery plays a crucial role in improving performance of the zinc-bromine static battery. By use of the TEAB along with TPAB or TBAB as the suitable complexing agent in a controlled manner, a bromine cross-over is locked. The bromine crossover happens when the bromide ions (Br-) migrate from a cathode side to an anode side of the zinc-bromine static battery. When the bromide ions reach the anode side, the bromide ions may trigger corrosion of the anode. Further, the self-discharge is reduced significantly. Higher solubility of the zinc bromide may enhance the capacity of the zinc-bromine static battery, but due to the lower solubility of the bromine complexing agents in electrolytes, the electrolytes generally suffer from a high self-discharge. The important factor for achieving greater efficiency of zinc bromide electrolytes is the amount of the bromine complexing agent used for a practical application. The disclosed electrolyte having a specific bromine complexing agent in its optimized composition, as disclosed in the above aspect of the present disclosure, is capable to arrest the self-discharge.

The bromine complexing agents (particularly quaternary ammonium salts) function through a specific ionic interaction mechanism. During charging, when Br2 is generated at the positive electrode, it forms Br3- ions with bromide ions already present in the electrolyte. The quaternary ammonium cations (R4N+) then associate with these Br3- ions through electrostatic interactions to form an insoluble [(R4N+)(Br3-)] complex. This solid complex effectively immobilizes the reactive bromine species, preventing them from diffusing to the zinc electrode and causing self-discharge. The quaternary ammonium salt's alkyl chain length affects the stability of this complex formation, which is why the specific combination of TEAB/TEAC with TPAB/TBAB provides superior performance compared to single complexing agents.

The electrolyte composition demonstrates a significant and unexpected synergistic effect through the specific combination of quaternary ammonium salts (TEAB with TPAB/TBAB) as evidenced by Table 1, 2, and 5. While TEAB alone at 0.5M and 1M concentrations yields energy efficiencies of only 72% and 80% respectively, the TEAB (0.5M)/TPAB (0.5M) combination achieves a remarkable 91% efficiency representing an 11-19% improvement that cannot be predicted from the individual properties of these compounds. Similarly, the TEAC/TBAB combination delivers 86% efficiency, significantly outperforming single-agent solutions and other quaternary ammonium combinations which only reach 73-74% efficiency. This synergistic interaction stems from the complementary molecular behavior where different quaternary ammonium salts cooperatively capture tribromide ions in solid form, effectively preventing self-discharge while maintaining excellent ionic conductivity. The optimal concentration range (30-55% of zinc bromide concentration) is further validated by Table 5 data showing consistent performance (83-88% efficiency with 98-99.5% capacity retention), representing a substantial advancement over conventional zinc-bromine battery electrolytes that typically achieve only 65-70% efficiency. This innovation successfully addresses the longstanding technical challenge of balancing high energy efficiency with dendrite suppression without requiring separate anti-dendrite additives. The present disclosure further provides a specific ratio and a specific selection of a quaternary ammonium salts that allow the dissolution of quaternary ammonium salts in the presence of zinc bromide. The mixture of the quaternary ammonium salts is selected from a combination of TPAB (tetra propylammonium bromide) and TBAB (tetrabutylammonium) or a chloride salt along with TEAB (Tetraethylammonium bromide) or Tetraethylammonium chloride (TEAC).

During experimentation, a surprising effect was found that works specifically at a specific and optimized molar ratio between the zinc bromide and the bromine complexing agent i.e. TEAB along with TPAB or TBAB, which is enough to capture almost the entire Br₃⁻ ion and prevent the self-discharge of the zinc-bromine static battery. The optimized molar ratio between the zinc bromide and the bromine complexing agents to arrest the self-discharge is experimentally found to be 2:1. The optimized molar ratio of 2:1 between the zinc bromide and the bromine complexing agent and selection of salts in specific concentration range allows the dissolution of >1.5 M of TEAB (or even higher than that) in the presence of 3 M of the zinc bromide. The higher dissolution of the bromine complexing agent (e.g., the TEAB) not only minimizes the self-discharge but also allows to use of more active ingredient (i.e., zinc bromide), which directly enhances the energy density of the zinc-bromine static battery.

Generally, the aqueous electrolyte solution, which circulates through the cathodic side during the charging of the zinc-bromine static battery contains the bromine complexing agent, which is capable of forming a water-immiscible liquid phase upon complexing with Br₂/Br₃⁻ species, mainly tribromide ions. Thus, the elemental bromine generated at the cathode side during charging reacts almost instantaneously with the water-soluble bromine complexing agent, to form a water-immiscible oily phase, thereby effectively avoiding the diffusion of the elemental bromine, the cross-contamination of the cathode and the anode, and the like. In the present disclosure, there is provided the electrolyte (i.e., an aqueous electrolyte composition) for the high-performance zinc-bromine static batteries, where effective utilization of the bromine complexing agents in a controlled amount arrests the Br₃⁻ ions in a solid form resulting in almost wholly diminished intrinsic self-discharge. Beneficially, as compared to conventional approaches, the electrolyte of the present disclosure manifests synergetic effects that improves battery stability and works without the use of expensive ion exchange membranes.

As explained above, the bromine-complexing agents is added to the electrolyte of the zinc-bromine static battery to minimize the vapor pressure of the elemental bromine. Properties considered important for screening the bromine-complexing agents include stability against crystallization down to low ambient temperatures, high conductivity of the electrolyte, low to negligible viscosity of the complexcontaining a solid phase, and the ability to maintain a minimal, yet effective, an amount of 'free bromine' in the aqueous phase.

Herein, the bromine complexing agent, TEAB along with TPAB or TBAB, combines with the tribromide ions on the cathode side during charging to form a bromine complex compound (in a solid form) and plays an important role of retaining electric energy.

In some implementations, the electrolyte comprises the zinc bromide and the quaternary ammonium salt in a ratio of 2:1, where the quaternary ammonium salt arrests the tribromide ions in a solid form when used in a controlled amount in such specific ratio. The quaternary ammonium salts are TEAB along with TPAB or TBAB. The use of the TEAB along with TPAB or TBAB as the bromine complexing agents prevents dendrite formation due to its interaction chemistry with the free bromide ions. Further, TEAB along with TPAB or TBAB arrest the tribromide ions in solid form due to which the electrolyte possesses high ionic conductivity and low viscosity, which makes it suitable for practical application.

The dendritic zinc growth problem can somehow be suppressed by adding a small amount of inorganic/organic additives, but the performance of the zinc-bromine static batteries while using the conventional electrolytes was still not satisfactory (e.g., low performance). Further, in conventional approaches, the addition of external additive significantly reduces the ionic conductivity, and naturally affects the reaction kinetics and as a consequence, overall cell performance got affected. Beneficially as compared to conventional electrolytes, the electrolyte of the present disclosure does not require the addition of external additives to control zinc dendrite formation. TEAB along with TPAB or TBAB when used as the bromine complexing agent alters the electrodeposition of the zinc from the dendritic growth to a non-dendritic development as the polar TEA⁺ ion (tetraethyl ammonium ion) prefers to be adsorbed on the zinc nucleus, blocking the strong electric field and regulating the ion distribution on the interface. Hence, the present disclosure provides the electrolyte that significantly improves the performance of the zinc-bromine static battery where the composition of the electrolyte is free from anti-dendrite agents.

The presence of the glycol based anti-freezing agent, and the additional supporting ionic conducting agents such as of zinc chloride, potassium chloride, magnesium chloride, lithium chloride, calcium chloride, or a combination thereof specified in corresponding molar concentration further manifests synergistic effect by increasing the ionic conductivity as well as enhancing the solubility of bromine complexing agents in electrolyte. Surprisingly the combination of supporting ionic agents increases ionic conductivity and thermal stability of the electrolyte, significantly solving the aforementioned problems, especially the dendrite formation problem and the self-discharge.

Some additional advantages of the electrolyte are a) cost-effective, energy-efficient and scalable process in electrolyte production; b) eco-friendly and non-toxic electrolyte; c) non-flammable electrolyte; d) suitable for zinc bromide energy storage applicable for a range varying from electric vehicles to grid storage; and e) the electrolyte is compatible with commercially available Absorbed Glass Mat (AGM) separator, polyethylene (PE), or polypropylene (PP) separators.

In accordance with an embodiment, the glycol based anti-freezing agent is selected from the group comprising of monoethylene glycol, propylene glycol, 1,3-butylene glycol, polyethylene glycol 200, polyethylene glycol 400, or a combination thereof. The use of glycol-based anti-freezing agents in the electrolyte can prevent the electrolyte from freezing in low temperatures, thereby maintaining the performance and longevity of the static zinc-based battery.

In accordance with an embodiment, the glycol based anti-freezing agent is monoethylene glycol in the molar concentration ranging from about 0.1 M to 2.0 M. It was observed, during experimentation, that monoethylene glycol in the molar concentration ranging from about 0.10 M to 2.0 M specially was more effective and also contributed to the thermal stability of the electrolyte suitable for versatile weather condition. During experimentation, it was observed that the electrolyte gives a better efficiency at high temperatures ranging from 35 degree Celsius to 70 degrees Celsius.

One or more additional supporting ionic conducting agents are selected from a group comprising of zinc chloride, potassium chloride, magnesium chloride, lithium chloride, calcium chloride, potassium chloride, or a combination thereof.

Specifically, in some implementation, supporting ionic conducting agents are used, which includes the zinc chloride in the molar concentration ranging from about 0.5 M to 2.0 M, preferably 1.5 M, along with potassium chloride in the molar concentration ranging from about 0.5 M to 2 M, preferably 1 M. Alternatively, in another implementation, magnesium chloride in the molar concentration ranging from about 0.5 M to 2 M, preferably 1 M, is used along with the zinc chloride in the molar concentration ranging from about 0.5 M to 2 M, preferably 1.5 M. In another implementation, lithium chloride in the molar concentration ranging from about 0.5 M to 2 M, preferably 1 M, is used along with the zinc chloride in the molar concentration ranging from about 0.5 M to 2 M, preferably 1.6 M. In another implementation, calcium chloride in the molar concentration ranging from about 0.5 M to 2 M, preferably 1 M, is used along with the zinc chloride in the molar concentration ranging from about 0.5 M to 2 M, preferably 1.6 M. Potassium chloride or magnesium chloride or lithium chloride or calcium chloride, or one or more salts may be used in an optimized ratio for other variants of the electrolyte. Different colligative properties of mentioned chloride salts facilitates in synthesizing various electrolytes as per requirement like low temperature (-10 degree Celsius) by tuning the composition.

Although the zinc bromide acts as a conducting agent, poor ionic conductivity is still an issue for the electrolyte. In the present disclosure, it is observed that using the supporting electrolytes like potassium chloride and/or magnesium chloride and/or lithium chloride and/or calcium chloride enhances the ionic conductivity but does not affect other properties significantly like pH. The electrolyte is free of pH maintaining agents and buffering agents. In known commercial batteries, to enhance the ionic conductivity, highly acidic solutions (in some cases mild acid) are used as one of the major components in zinc-bromine-based electrolytes, which reduces the pH of the electrolyte to a significant value. At lower pH, the zinc-bromine battery suffers from hydrogen evolution and further reduces battery efficiency. Further, gas evolution during cycling is a safety concern on a commercial scale. Hence, in yet another implementation, the present disclosure provides the electrolyte in which no such acid(s) is used, and the pH of the electrolyte is maintained at a particular value that is in the range of 3.5 to 5.0, preferably the pH of about 4.7, such that no such gas evolution occurs during cycling.

As discussed above, the electrolyte is free of the pH maintaining agents and the buffering agents. Typically, according to previously reported articles, researchers preferred to use the buffering agent and/or the pH maintaining agent to maintain the pH of the electrolyte throughout the cycling for an extended period to avoid side reactions at relatively lower or higher pH. However, it is observed that the use of such buffering agent reduces the ionic conductivity of the electrolyte. Hence, in a preferred embodiment, the present disclosure provides the electrolyte that is free from the buffering agent and the pH maintaining agents, and the pH of the electrolyte during cycling is maintained at about 4.7, even without using such buffering agent and the pH maintenance agents.

Many electrolyte compositions with various permutations and combination of the zinc bromide to TEAB, TPAB, TBAB, TEAC, 1-Ethyl-1-methylpyrrolidinium bromide, N-Ethyl-N-methylmorpholinium bromide or combination thereof were tested, for example, a) 2 M zinc bromide and 0.5 M TEAB; b) 2 M zinc bromide and 1 M TEAB; c) 2 M zinc bromide and 0.3 M TEAB; d) 2 M zinc bromide, 0.5 M 1-Ethyl-1-methylpyrrolidinium bromide and 0.5 M TEAB, e) 2 M zinc bromide, 0.5 M TEAB and 0.5 M TPAB, f) 2 M zinc bromide, 0.5 M TEAC and 0.3 M TBAB and other electrolytic ingredients, like potassium chloride, zinc chloride in various concentration, but precipitation of bromozincate ions from solution was observed. Typically, in the presence of the zinc bromide, dissolution of TEAB or any other complexing agent, at ambient temperature, at higher concentration (>0.3 M) was challenging and not yet reported as it precipitates out in the form of bromozincate. The precipitation of the bromozincate ions from solution occurs when the solution becomes supersaturated with the ions, and they form an insoluble solid that separates from the electrolyte solution.

The precipitation of the bromozincate ions from solution may be detected using various known methods, which includes the following. a) visual observation in which an appearance of a solid precipitate may be observed with a naked eye; b) pH measurement in which the pH of the solution may be measured using a pH meter or indicator paper. A change in pH, particularly an increase in alkalinity, may indicate the precipitation of the bromozincate ions. The method for detecting the precipitation of the bromozincate ions from the solution may further include c) conductivity measurement in which the conductivity of the solution may be measured using a conductivity meter. A decrease in conductivity can indicate the formation of an insulating precipitate. The method for detecting the precipitation of the bromozincate ions from the solution may further include d) spectrophotometry in which the concentration of bromo-zincate ions in the solution may be determined using spectrophotometry, by measuring the absorbance of light at a specific wavelength. The method for detecting the precipitation of the bromozincate ions from the solution may include e) X-ray diffraction in which the crystal structure of the precipitate may be analysed using X-ray diffraction, which may confirm the presence of the bromo-zincate ions in the precipitate.

It is known that the main challenges of the Zinc-Bromine flow batteries include (a) low current densities during cycling, (b) dendrite formation, (c) high viscosity of the electrolyte polybromide phase in low states of charge, (d) self-discharge and (e) pH variations during operation. The present disclosure has dealt with the above mentioned drawbacks. The present disclosure moreover provides a high energy efficiency of greater than equal to 87% which may be achieved by using the electrolyte as described above, whereas, for zinc bromide chemistry, practically an energy efficiency of 65-70% is generally achieved with other prior art reported electrolytes. Further, as the TEAB along with TPAB or TBAB arrest the tribromide ions in solid form, the electrolyte composition possesses high ionic conductivity and low viscosity, which makes it suitable for practical application.

In an implementation, the solvent of the electrolyte is water, and no specific acid or alkaline solution is used. In another implementation, the structure of the zinc-bromine static battery containing said aqueous electrolyte of the present disclosure may be a button battery, a cylindrical battery, a soft pack battery, a battery pack of any shape and size, or a square shell battery.

In another embodiment, the zinc-bromine static battery prepared as per the present disclosure is suitable for zinc bromide energy storage applicable for a range varying from electric three-wheeler to grid storage. The electrolyte is compatible with commercially available AGM separator, PE and PP separator.

In one another implementation, the present disclosure provides zinc-bromine static battery composed of the carbon-based electrodes and the electrolyte as described above, wherein said electrolyte provides steady coulombic efficiency of greater than 98% throughout the cycles indicating efficient participation of the redox couples within the applied voltage range. The above said electrolyte further possess long cycling stability of up to 500 cycles at a higher current rate.

The present disclosure will now be described in detail with reference to examples.

### EXAMPLES

### General Method of preparation:

Ethylene glycol, a supporting electrolyte, and water were uniformly mixed to form a solvent. The solvent was added to the required amount of the zinc bromide and the bromine complexing agents to obtain an electrolyte solution in a semi solid state for the zinc-bromine static battery. The electrolyte solution was heated at a temperature of around 70 degrees Celsius to obtain an aqueous electrolyte solution.

Example 1: 1 M of ethylene glycol, 1.7 M of zinc chloride, 3.0 M of potassium chloride, and water were uniformly mixed to form a solvent. The solvent was added to 1.5 M of zinc bromide, 0.4 M of TEAB (bromine complexing agent) and 0.3M of TBAB (bromine complexing agent) to obtain an electrolyte solution in a semi solid state for the zinc-bromine static battery. The electrolyte solution is heated at a temperature of around 70 degrees Celsius to obtain an aqueous electrolyte solution.

Example 2: 1.35 M of ethylene glycol, 1.7 M of zinc chloride, 1.0 M of potassium chloride, and water to form were uniformly mixed to for a solvent. The solvent was added 1.5 M of zinc bromide, 0.4 M of TEAB (bromine complexing agent), 0.3 M of TPAB (bromine complexing agent) to obtain an electrolyte solution in a semi solid state for the zinc-bromine static battery. The electrolyte solution was heated at a temperature of around 70 degrees Celsius to obtain an aqueous electrolyte solution.

Example 3: 0.1 M of ethylene glycol, 1.4 M of zinc chloride, 2.0 M of potassium chloride, and water were uniformly mixed to form a solvent. The solvent was added to 1.8 M of zinc bromide 0.3 M of TEAB (bromine complexing agent), 0.3 M of TBAB (bromine complexing agent) to obtain an electrolyte solution in a semi solid state for the zinc-bromine static battery. The electrolyte solution was heated at a temperature of around 70 degrees Celsius to obtain an aqueous electrolyte solution.

Example 4: 1 M of ethylene glycol, 1.5 M of zinc chloride, 1 M of magnesium chloride, and water were uniformly mixed to form a solvent. The solvent was added to 2 M of zinc bromide, 0.5 M of TEAC (bromine complexing agent), 0.3 M of TPAB (i.e., the bromine complexing agent) to obtain an electrolyte solution in a semi solid state for the zinc-bromine static battery. The electrolyte solution was heated at a temperature of around 70 degrees Celsius to obtain an aqueous electrolyte solution.

Example 5: 1 M of ethylene glycol, 1.6. M of zinc chloride, 2.0 M of potassium chloride, and water were uniformly mixed to form a solvent. The solvent was added to 1.8 M of zinc bromide, 1.6 M of TEAB (bromine complexing agent) and 0.3 M of TBAB (bromine complexing agent) to obtain an electrolyte solution in a semi solid state of the zinc-bromine static battery. The electrolyte solution was heated at a temperature of around 70 degrees Celsius to obtain an aqueous electrolyte solution.

Example 6: 1 M of ethylene glycol, 1.6 M of zinc chloride, 2.0 M of potassium chloride, and water to form a solvent. The solvent was added to 2.5 M of zinc bromide, 1.0 M of TEAB (i.e., the bromine complexing agent) and 0.3 M of TPAB (i.e., the bromine complexing agent) to obtain an electrolyte solution in a semi solid state for the zinc-bromine static battery. The electrolyte solution was heated at a temperature of around 70 degrees Celsius to obtain an aqueous electrolyte solution.

Example 7: 1 M of ethylene glycol, 1.4 M of zinc chloride, 2 M of magnesium chloride, and water are mixed uniformly to form a solvent. The solvent was added to 1.8 M of zinc bromide, 0.6 M of TEAB (bromine complexing agent) and 0.4 M of TPAB (i.e., the bromine complexing agent) to obtain an electrolyte solution in a semi solid state for the zinc-bromine static battery. The electrolyte solution was heated at a temperature of around 70 degrees Celsius to obtain an aqueous electrolyte solution.

Example 8: 0.1 M of ethylene glycol, 1.5 M of zinc chloride, 1 M of calcium chloride, and water were mixed uniformly to form a solvent. The solvent was added to 2 M of zinc bromide, 0.5 M of TEAC and 0.4 M of TBAB to obtain an electrolyte solution in a semi solid state for the zinc-bromine static battery. The electrolyte solution was heated at a temperature of around 70 degrees Celsius to obtain an aqueous electrolyte solution.

Example 9: 1M of ethylene glycol, 1.6M of zinc chloride, 1M of lithium chloride, and water were mixed uniformly to form solvent. The solvent was added to 1.8 M of zinc bromide, 0.6 M of TEAC and 0.3 M of TPAB to obtain an electrolyte solution in a semi solid state of the zinc-bromine static battery. The electrolyte solution was heated at a temperature of around 70 degrees Celsius to obtain an aqueous electrolyte solution.

Example 10: 0.1 M of ethylene glycol, 1.4 M of zinc chloride, 2 M of potassium chloride, and water were uniformly mixed to form a solvent. The solvent was added to 1.8 M of zinc bromide, 0.4 M of TEAB, 0.4 M of TBAB to obtain an electrolyte solution in a semi solid state of the zinc-bromine static battery. The electrolyte solution was heated at a temperature of around 70 degrees Celsius to obtain an aqueous electrolyte solution.

Example 11: 1 M of ethylene glycol, 1.5 M of zinc chloride, 2 M of potassium chloride, and water were uniformly mixed to form solvent. The solvent was added to 2 M of zinc bromide, 0.5 M of TEAB, 0.5M of TPAB to obtain an electrolyte solution in a semi solid state of the zinc-bromine static battery. The electrolyte solution was heated at a temperature of around 70 degrees Celsius to obtain an aqueous electrolyte solution.

### Example 12: Lower Boundary Test (30% complexing agent)

0.5 M of ethylene glycol, 1.5 M of zinc chloride, 1.5 M of potassium chloride, and water were uniformly mixed to form a solvent. The solvent was added to 2.0 M of zinc bromide, 0.45 M of TEAB and 0.15 M of TPAB (total complexing agent = 0.6 M, which is 30% of 2.0 M ZnBr2) to obtain an electrolyte solution. The energy efficiency was 83% with capacity retention of 99% after 100 cycles.

### Example 13: Mid-Range Test (40% complexing agent)

0.8 M of ethylene glycol, 1.4 M of zinc chloride, 1.2 M of magnesium chloride, and water were uniformly mixed to form a solvent. The solvent was added to 2.5 M of zinc bromide, 0.6 M of TEAB and 0.4 M of TBAB (total complexing agent = 1.0 M, which is 40% of 2.5 M ZnBr2) to obtain an electrolyte solution. The energy efficiency was 88% with capacity retention of 99.5% after 100 cycles.

### Example 14: Upper Boundary Test (55% complexing agent)

1.5 M of ethylene glycol, 1.6 M of zinc chloride, 0.8 M of lithium chloride, and water were uniformly mixed to form a solvent. The solvent was added to 3.0 M of zinc bromide, 0.95 M of TEAB and 0.7 M of TPAB (total complexing agent = 1.65 M, which is 55% of 3.0 M ZnBr2) to obtain an electrolyte solution. The energy efficiency was 84% with capacity retention of 98% after 100 cycles.

### Example 15: Comprehensive Boundary Testing

To systematically evaluate the performance across all various concentration ranges of electrolyte components, eight electrolyte formulations were prepared to test the boundaries of each component range.

**TABLE 1: Boundary Test Formulations**

| Formulation | ZnBr₂ | Complexing Agents (% of ZnBr₂) | Glycol | Supporting Agents |
|---|---|---|---|---|
| F1 | 1.5 M | TEAB: 0.3 M, TPAB: 0.15 M (30%) | 0.1 M | ZnCl₂: 0.5 M |
| F2 | 1.5 M | TEAB: 0.55 M, TPAB: 0.275 M (55%) | 0.1 M | KCl: 0.5 M |
| F3 | 3.0 M | TEAB: 0.6 M, TPAB: 0.3 M (30%) | 0.1 M | MgCl₂: 2.0 M |
| F4 | 3.0 M | TEAB: 1.1 M, TPAB: 0.55 M (55%) | 0.1 M | LiCl: 2.0 M |
| F5 | 1.5 M | TEAB: 0.3 M, TBAB: 0.15 M (30%) | 2.0 M | CaCl₂: 0.5 M |
| F6 | 1.5 M | TEAB: 0.55 M, TBAB: 0.275 M (55%) | 2.0 M | ZnCl₂: 2.0 M |
| F7 | 3.0 M | TEAC: 0.6 M, TBAB: 0.3 M (30%) | 2.0 M | KCl: 0.5 M, MgCl₂: 0.5 M |
| F8 | 3.0 M | TEAC: 1.1 M, TBAB: 0.55 M (55%) | 2.0 M | LiCl: 1.0 M, CaCl₂: 1.0 M |

All formulations were tested under identical conditions through 150 charge-discharge cycles at 25°C. The results are summarized in Table 2:

**TABLE 2: Performance Results for Boundary Formulations**

| **Formulation** | **Energy Efficiency (%)** | **Capacity Retention (%)** | **Self-Discharge (%/day)** | **Ionic Conductivity (mS/cm)** |
|---|---|---|---|---|
| F1 | 81.3 | 98.2 | 0.45 | 52.3 |
| F2 | 83.5 | 97.8 | 0.37 | 48.7 |
| F3 | 82.8 | 98.5 | 0.39 | 63.5 |
| F4 | 84.2 | 97.3 | 0.36 | 55.8 |
| F5 | 82.5 | 98.7 | 0.42 | 45.2 |
| F6 | 83.7 | 97.5 | 0.38 | 42.6 |
| F7 | 84.1 | 99.0 | 0.35 | 58.7 |
| F8 | 85.3 | 97.6 | 0.33 | 51.2 |

All formulations testing the upper and lower limits of each electrolyte component range (zinc bromide: 1.5-3.0 M, quaternary ammonium salts: 30-55% of zinc bromide concentration, glycol-based anti-freezing agent: 0.1-2.0 M, and supporting ionic conducting agents: 0.5-2.0 M) exhibited excellent performance. All formulations at the boundaries testing the above upper and lower limits of each electrolyte component range exhibited excellent performance, with energy efficiencies consistently above 81%, capacity retention over 97%, and self-discharge rates below 0.45% per day. Beneficially, the performance remained robust across the entire range of each component, demonstrating that the above ranges represent the optimal operating window for the electrolyte composition.

Testing outside these ranges revealed: (1) zinc bromide below 1.5 M resulted in inadequate energy density; (2) zinc bromide above 3.0 M led to precipitation issues; (3) complexing agent concentrations below 30% of zinc bromide resulted in insufficient tribromide ion capture and increased self-discharge; (4) complexing agent concentrations above 55% of zinc bromide reduced ionic conductivity; (5) glycol concentrations outside 0.1-2.0 M adversely affected viscosity and conductivity; and (6) supporting ionic agents outside 0.5-2.0 M range negatively impacted conductivity and zinc plating morphology.

The experiment confirmed that the ranges (zinc bromide: 1.5-3.0 M, quaternary ammonium salts: 30-55% of zinc bromide concentration, glycol-based anti-freezing agent: 0.1-2.0 M, and supporting ionic conducting agents: 0.5-2.0 M) collectively define the optimal compositional window for achieving high energy efficiency, excellent capacity retention, and minimized self-discharge in zinc-bromine static batteries. More experimental results are described below.

### RESULTS

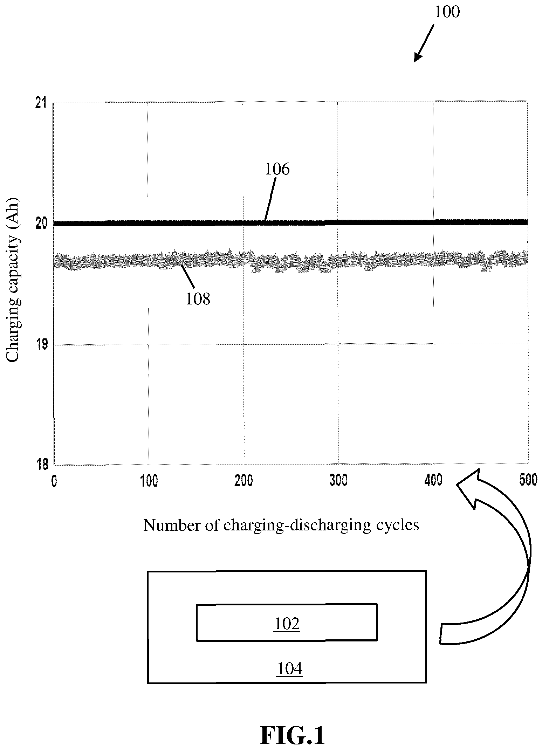

FIG. 1 is a diagram illustrating a graphical representation of a charging capacity of a zinc-bromine static battery at a number of charge-discharge cycles of the zinc-bromine static battery, in accordance with an embodiment of the present disclosure. With reference to FIG. 1, there is shown a graphical representation **100** of a charging capacity of a zinc-bromine static battery **102** at a number of charge-discharge cycles of the zinc-bromine static battery **102.** The zinc-bromine static battery **104** utilizes an electrolyte **102.** X- axis represents a number of charge and discharge cycles and Y-axis represents the charging capacity in Ampere hour (Ah). The composition of the electrolyte **102** is 1 M of ethylene glycol, 1.5 M of zinc chloride, 2 M of potassium chloride, 2 M of zinc bromide, 0.5M of TEAB and 0.5M of TPAB, as specified in Example 11.

The graphical representation **100** includes a first curve **106** that represents a number of charge cycles. The graphical representation **100** further includes a second curve **108** that represents a number of discharge cycles. In this case, the composition of the electrolyte **102** manifested a good reversibility. Up to 500 cycles, there is no significant loss in the charging capacity of the zinc-bromine static battery **104.** It should be noted that a loss in the capacity is less than 1 percent. The charging capacity enhances a coulombic efficiency and facilitates maintenance of the coulombic efficiency at more than 98%. The charging capacity and the coulombic efficiency increase the energy density of the zinc-bromine static battery **104,** increasing the operational efficiency of the zinc-bromine static battery **104.**

The electrolyte **102** is used of the zinc-bromine static battery **104** that is applicable for a range varying from electric vehicles, home appliances, to grid storage. The electrolyte **102** is compatible with commercially available Absorbed Glass Mat (AGM) separator, polyethylene (PE), or polypropylene (PP) separator and other applications apart from energy storage.

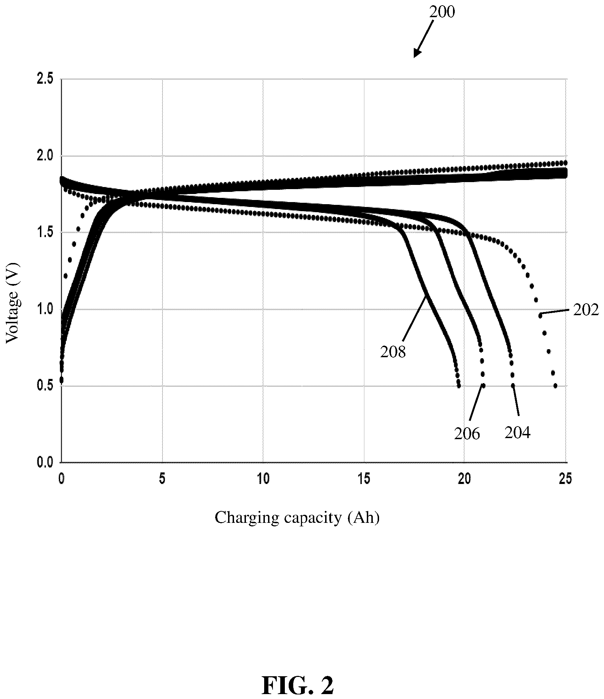

FIG. 2 is a diagram illustrating a charge-discharge profile of the zinc-bromine static battery for various electrolytes, in accordance with an embodiment of the present disclosure. With reference to FIG. 2, there is shown a graphical representation **200** of depicting a variation of charging and discharging voltage with the charging capacity of a zinc-bromine static battery using different electrolytes having different compositions of the bromine complexing agents. X axis of the graphical representation **200** represents the charging capacity in ampere hour. Y-axis of the graphical representation represents voltage in volt. The graphical representation **200** includes charge profiles of the zinc-bromine static battery using different electrolyte compositions. The charge profiles remain same for the different electrolyte compositions. The graphical representation **200** further includes discharge profiles of the zinc-bromine static battery using different electrolyte compositions. The graphical representation **200** includes a first curve **202** that represents a discharge profile for a first electrolyte (Electrolyte 1). The graphical representation **200** further includes a second curve **204** that represents a discharge profile for a second electrolyte (Electrolyte 2). The graphical representation **200** further includes a third curve **206** that represents a discharge profile for a third electrolyte (Electrolyte 3). The graphical representation **200** further includes a fourth curve **208** that represents a discharge profile for a fourth electrolyte (Electrolyte 4).

The compositions of the first electrolyte, the second electrolyte, the third electrolyte and the fourth electrolyte are given in Table 3 as provided below.

**Table 3**

| Electrolytes | Compositions |
|---|---|
| Electrolyte 1 | 2 M of zinc bromide, 1.5 M of zinc chloride, 1 M of potassium chloride, 1.3 M of ethylene glycol, 0.5 M of TEAB, 0.5 M of TPAB |
| Electrolyte 2 | 2 M of zinc bromide, 1.5 M of zinc chloride, 1 M of potassium chloride, 1.3 M of ethylene glycol, 0.5 M of TEAC, 0.3 M of TBAB |
| Electrolyte 3 | 2 M of zinc bromide, 1.5 M of zinc chloride, 1 M of potassium chloride, 1.3 M of ethylene glycol, 0.5 M of N-Ethyl-N-methylmorpholinium bromide, 0.5 M of TEAB |
| Electrolyte 4 | 2 M of zinc bromide, 1.5 M of zinc chloride, 1 M of potassium chloride, 1.3 M of ethylene glycol, 0.5 M of 1-Ethyl-1-methylpyrrolidinium bromide |

In conclusion, as shown in FIG. 2, the first electrolyte having 0.5 M of TEAB and 0.5 of TPAB shows higher capacity retention than the second electrolyte, the third electrolyte, and the fourth electrolyte. In other words, the first electrolyte, referred by the first curve **202,** shows best reversibility among the second electrolyte, the third electrolyte, and the fourth electrolyte mentioned in Table 1. While the fourth electrolyte, referred by the fourth curve **208,** shows the least reversibility. Hence, combination **202** shows best utilization of redox-active species.

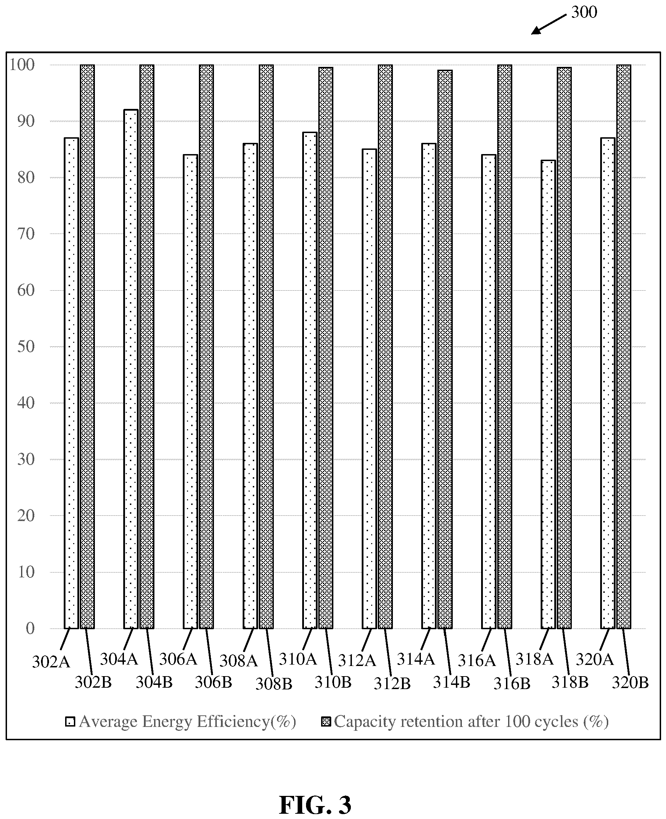

FIG. 3 is a diagram illustrating a graphical representation of an average energy efficiency versus a capacity retention of the zinc-bromine static battery, in accordance with an embodiment of the present disclosure. With reference to FIG. 3, there is shown a bar graph **300** depicting the average energy efficiency and the capacity retention of the zinc-bromine static battery using different compositions of electrolytes. The bar graph **300** includes a first bar **302A** and a second bar **302B** representing the average energy efficiency and the capacity retention of the zinc-bromine static battery using the electrolyte obtained in Example 1, respectively. The bar graph **300** further includes a third bar **304A** and a fourth bar **304B** representing the average energy efficiency and the capacity retention of the zinc-bromine static battery using the electrolyte obtained in Example 2, respectively. The bar graph **300** further includes a fifth bar **306A** and a sixth bar **306B** representing the average energy efficiency and the capacity retention of the zinc-bromine static battery using the electrolyte obtained in Example 3, respectively.

The bar graph **300** further includes a seventh **308A** and an eight bar **308B** representing the average energy efficiency and the capacity retention of the zinc-bromine static battery using the electrolyte obtained in Example 4, respectively. The bar graph **300** further includes a ninth bar **310A** and a tenth bar **310B** representing the average energy efficiency and the capacity retention of the zinc-bromine static battery using the electrolyte obtained in Example 5, respectively. The bar graph **300** further includes an eleventh bar **312A** and a twelfth bar **312B** representing the average energy efficiency and the capacity retention of the zinc-bromine static battery using the electrolyte obtained in Example 6, respectively. The bar graph **300** further includes a thirteenth bar **314A** and a fourteenth bar **314B** representing the average energy efficiency and the capacity retention of the zinc-bromine static battery using the electrolyte obtained in Example 7, respectively. The bar graph **300** further includes a fifteenth bar **316A** and a sixteenth bar **316B** representing the average energy efficiency and the capacity retention of the zinc-bromine static battery using the electrolyte obtained in Example 8, respectively. The bar graph **300** further includes a seventeenth **318A** and an eighteenth bar **318B** representing the average energy efficiency and the capacity retention of the zinc-bromine static battery using the electrolyte obtained in Example 9, respectively. The bar graph **300** further includes a nineteenth bar **320A** and a twentieth bar **320B** representing the average energy efficiency and the capacity retention of the zinc-bromine static battery using the electrolyte obtained in Example 10, respectively.

The composition of the above mentioned examples are also mentioned in Table 4 provided below.

**TABLE 4**

| Exa mple s | Composition (Molarity) | | | | | Average Energy efficienc y (%) | Capacity retention after 100 |
|---|---|---|---|---|---|---|---|
| | ZB | TEAB/TBAB/ TPAB/TEAC | EG | ZC | PC/MC/C C/LC | | cycles (%) |
| 1 | 1.5 | TEAB:0.4 | 1 | 1.7 | PC: 3 | 87 | 100 |
| | | TBAB:0.3 | | | | | |
| 2 | 1.4 | TEAB:0.4 | 1.3 5 | 1.7 | PC: 1 | 92 | 100 |
| | | TPAB:0.3 | | | | | |
| 3 | 1.8 | TEAC:0.8 | 1.3 | 1.4 | PC: 2 | 84 | 100 |
| | | TBAB:0.3 | 5 | | | | |
| 4 | 2 | TEAC:0.5 | 1 | 1.5 | MC: 1 | 86 | 100 |
| | | TPAB:0.3 | | | | | |
| 5 | 2 | TEAB:0.6 | 1 | 1.6 | PC: 2 | 88 | 99.5 |
| | | TBAB:0.3 | | | | | |
| 6 | 2 | TEAB:1 | 1.5 | 1.6 | PC:2 | 85 | 100 |
| | | TBAB:0.3 | | | | | |
| 7 | 1.8 | TEAB: 0.6 | 1 | 1.4 | MC:2 | 86 | 99 |
| | | TPAB: 0.4 | | | | | |
| 8 | 2 | TEAC: 0.5 | 0.1 | 1.5 | CC:1 | 84 | 100 |
| | | TBAB: 0.4 | | | | | |
| 9 | 1.8 | TEAC: 0.6 | 1 | 1.6 | LC:1 | 83 | 99.5 |
| | | TPAB: 0.3 | | | | | |
| 10 | 1.8 | TEAB: 0.4 | 0.1 | 1.4 | PC:2 | 87 | 100 |
| | | TBAB: 0.4 | | | | | |

The electrolyte compositions were evaluated for their performance based on parameters such as the average energy efficiency, and the capacity retention after 100 cycles. For the molar concentration of the zinc bromide (ZB) and the bromine complexing agents in the different electrolytes, average energy efficiency of greater than or equal to 85% was achieved that is considered as significantly high, as shown in FIG. 3.

It is to be understood that, for zinc bromide chemistry, practically average energy efficiency of 65-70% is generally achieved currently with conventional electrolyte composition. Further, as shown in FIG. 3, the average energy efficiency (> 80 %) throughout the charging-discharging cycles indicates efficient participation of the redox couples within the applied voltage range when the electrolyte mentioned in Table 2 is used, in the specific molar concentration of its ingredients. Furthermore, the capacity retention of about 99% of the zinc-bromine static battery (using the electrolytes of Table 2) was observed.

Here, ZB: Zinc Bromide, TEAB: Teraethylammonium bromide, TBAB: Tetrabutylammonium bromide, TPAB: Tetrapropylammonium bromide, TEAC: Tetraethylammonium chloride, ZC: Zinc chloride, EG: monoethylene glycol, CC: Calcium chloride, LC: Lithium chloride, MC: Magnesium Chloride, PC: Potassium chloride.

In addition, synergistic effect of the electrolyte comprising 2 M of zinc bromide, 1.5 M of zinc chloride, 1 M of potassium chloride, 1 M of ethylene glycol with multiple bromine complexing agents in mentioned in Table 5 provided below.

**TABLE 5:**

| Bromine complexing agents | Energy efficiency (%) at RT after 100 cycles |
|---|---|
| TEAB: 0.5 | 72 |
| TEAB: 1 | 80 |
| 1-Ethyl-1-methylpyrrolidinium bromide: 0.5 | 74 |
| TEAB: 0.5 | |
| N-Ethyl-N-methylmorpholinium bromide: 0.5 | 73 |
| TEAB: 0.5 | |
| TEAB: 0.5 | 91 |
| TPAB: 0.5 | |
| TEAC: 0.5 | 86 |
| TBAB: 0.3 | |

Composition of 2 M of zinc bromide, 1.5 M of zinc chloride, 1 M of potassium chloride, 1 M of ethylene glycol, 0.5 M of TEAB and 0.5 M of TPAB exhibits highest energy efficiency. TEAB and TPAB together produces synergistic effect which increases the energy efficiency in significant amount.

Moreover, a selection of effective ethylene glycol using active material zinc bromide (2 M), bromine complexing agents (0.5 M of TEAB, 0.5 M of TPAB), 1.5 M of zinc chloride and 1 M of potassium chloride is done. Electrolytes containing the various alternative ethylene glycol concentration were tested and corresponding average charging potential plateau and energy efficiency were estimated as enlisted in Table 6.

**TABLE 6**

| Ethylene glycol concentration (M) | Average charging potential plateau (V) | Energy efficiency (%) |
|---|---|---|
| 0.1 | 1.67 | 89 |
| 1 | 1.73 | 88 |
| 2 | 1.78 | 85 |
| 4 | 1.88 | 75 |

A higher charging plateau indicates higher overpotential due to lower electronic conductivity. With increasing in concentration of ethylene glycol, the viscosity of an electrolyte increases and ionic conductivity decreases, resulting in a low power rating and high electrolyte resistance. Further the use of more than 2 M ethylene glycol may drastically reduce the ionic conductivity of the electrolyte, leading to low energy efficiency.

To systematically investigate the critical parameter of quaternary ammonium salt concentration across the full claimed range (30-55% of zinc bromide concentration), additional electrolyte compositions were tested as detailed in Examples 12-14. Table 7 presents the results of these experiments:

**TABLE 7**

| Example | ZnBr₂ (M) | Complexing agent composition | Total complexing agent (% of ZnBr₂) | Energy efficiency (%) | Capacity retention (%) |
|---|---|---|---|---|---|
| 12 | 2.0 | TEAB: 0.45 M<br>TPAB: 0.15 M | 30% | 83 | 99 |
| 13 | 2.5 | TEAB: 0.6 M<br>TBAB: 0.4 M | 40% | 88 | 99.5 |
| 14 | 3.0 | TEAB: 0.95 M<br>TPAB: 0.7 M | 55% | 84 | 98 |

The data in Table 7 demonstrates the critical nature of the claimed concentration range. At the lower boundary (30%, Example 12), the energy efficiency remains good (83%) with excellent capacity retention. The mid-range concentration (40%, Example 13) exhibits optimal performance with 88% energy efficiency and 99.5% capacity retention. At the upper boundary (55%, Example 14), the system maintains good performance (84% efficiency) but begins to show slightly reduced capacity retention.

The systematic investigation confirms that the claimed range of 30-55% represents the optimal window for quaternary ammonium salt concentration. Below 30%, insufficient tribromide ion complexation occurs, leading to increased self-discharge (as evidenced by comparing with prior art results showing typically 65-70% efficiency). Above 55%, the high concentration of complexing agents begins to negatively impact ionic conductivity, reducing overall efficiency.

Notably, these results validate the unexpected synergistic effect observed throughout the claimed range when using a mixture of two quaternary ammonium salts rather than a single complexing agent. This synergy is particularly evident when comparing the energy efficiency of Example 13 (88% with a mixture of TEAB and TBAB at 40% of zinc bromide concentration) with the single-agent result shown in Table 3 (80% for TEAB alone at 50% of zinc bromide concentration).

Exemplary embodiments of the disclosure have been disclosed. A person of ordinary skill in the art recognizes that modifications fall within the teachings of this application. Any numerical values recited in the above application include all values from the lower value to the upper value in increments of one unit provided that there is a separation of at least 2 units between any lower value and any higher value. All possible combinations of numerical values between the lowest value and the highest value enumerated are to be considered to be expressly stated in this application. Unless otherwise stated, all ranges include both endpoints and all numbers between the endpoints. The use of "about' or "approximately in connection with a range applies to both ends of the range. Thus, "about 20 to 30' is intended to cover "about 20 to about 30, inclusive of at least the specified endpoints.

## Claims

1. An electrolyte (102) of a zinc-bromine static battery (104), comprising:
zinc bromide in molar concentration ranging from 1.5 M to 3.0 M;
a mixture of two or more quaternary ammonium salts as a bromine complexing agent in a range of 30% to 55% of the molar concentration of the zinc bromide;
a glycol based anti-freezing agent in molar concentration ranging from 0.1 M to 2.0 M; and
one or more additional supporting ionic conducting agents selected from a group comprising of zinc chloride, potassium chloride, magnesium chloride, lithium chloride, and calcium chloride,
wherein each of the one or more additional supporting ionic conducting agents or their combination is in a molar concentration ranging from 0.5 M to 2 M.

2. An electrolyte (102) of claim 1, wherein the mixture of quaternary ammonium salts is selected from: a combination of tetra propylammonium bromide (TPAB) and tetrabutylammonium (TBAB) or a chloride salt along with Tetraethylammonium bromide (TEAB) or Tetraethylammonium chloride (TEAC).

3. An electrolyte (102) of claim 1 or 2, wherein the glycol based anti-freezing agent is selected from the group comprising of monoethylene glycol, propylene glycol, 1,3-butylene glycol, polyethylene glycol 200, polyethylene glycol 400, or a combination thereof.

4. An electrolyte (102) of any preceding claim, wherein the glycol based anti-freezing agent is monoethylene glycol.

5. An electrolyte (102) of any preceding claim, wherein the electrolyte is free of pH maintaining agents and buffering agents.
